# EUROPEAN PATENT SPECIFICATION

(11) **EP 1 536 389 B1**
(45) Date of publication and mention of the grant of the patent: **06.08.2008**
(21) Application number: 04027882.2
(22) Date of filing: 24.11.2004
(51) Int. Cl.: G06Q 20/00

(54) **Early bill payment process**
Frühes Rechnungszahlungsverfahren
Procédé de paiement de facture rapide

(30) Priority: 25.11.2003 US 721640
(43) Date of publication of application: 01.06.2005
(73) Proprietor: PITNEY BOWES INC., Stamford, CT 06926-0700 (US)
(72) Inventor: Miller, Kenneth G, Bethel Connecticut 06801 (US); Desmond, John G, Fairfield Connecticut 06430 (US); Foth, Thomas J, Trumbull Connecticut 06611 (US); Swenson, Michael P, Danburry Connecticut 06811 (US); Winkelman, John H, Southbury Connecticut 06488 (US); Obrea, Andrei, Seymour Connecticut 06483 (US)
(74) Representative: HOFFMANN EITLE

(56) References cited:
- EP-A- 1 341 130
- WO-A-02/082212
- US-A1- 2001 037 297
- US-A1- 2002 128 967
- US-A1- 2002 152 165
- US-A1- 2003 009 420

## Description

This invention relates to the payment of bills and, more particularly, to the electronic payment of bills that are in a physical mail stream.

Consumers purchase goods and/or services from merchants, banks, mortgage companies, etc., who, in turn, submit a bill, i.e., statement, invoice, payment notice, etc., to the consumer for the payment of the goods, loan and/or services received. The consumer then writes a check to the biller and sends the check to the biller by physical mail. The biller, in turn, deposits the check in biller's bank. The biller's bank debits the consumer for the amount of the check and credits the biller for the amount of the check. The biller credits the consumer for the amount of payment received. Such a system is for example disclosed in U.S. Pat. No. 4,948,174.

Typically, it takes the United States Postal Service (USPS) three to five days to deliver mail to a recipient. If certain bills, i.e., loans, credit cards, etc., are not received by the biller by the bill's due date, the consumer may be charged a late fee and/or a finance charge. Sometimes, consumers do not have enough money in their accounts to pay their bills on time since they are waiting to receive a particular check, or they forget that the payment of a bill is due in a few days. In the above instances, the consumers may use their home personal computer to pay their bills from a consumer account over the Internet.

Many people do not own computers, and a large number of people who own computers are not connected to the Internet. Thus, the aforementioned individuals will have difficulty in paying their bills that are due in the next few days on time.

The present invention overcomes the disadvantages of the prior art by enabling consumer bill recipients to pay their bills via the USPS or other carrier sooner than was heretofore possible.

According to the present invention, there is provided a method for enabling a bill recipient to pay a creditor by electronic funds transfer as set out in Claim 1.

This invention allows a consumer to securely identify himself/herself to the USPS, other carrier, or a trusted third party on the outside of mail.
Fig. 1A is a drawing of a mail piece indicating full payment of a bill before the mail piece is posted;
Fig. 1B is a drawing of a mail piece indicating minimum payment of a bill before the mail piece is posted;
Fig. 1C is a drawing of a mail piece indicating a payment above the minimum payment of a bill before the mail piece is posted;
Fig. 2 is a drawing of bar codes 21 and 23 of Fig. 1A for full payment of the bill;
Fig. 3 is a drawing of mail piece 11 shown in Fig. 1A after mail piece 11 has been posted and scanned by the USPS;
Fig. 4 is a block diagram of the process flow of mail piece 11;
Fig. 5 is a flow chart showing the processing of the preparation of mail piece 11 of Fig. 1A; and
Fig. 6A and 6B is a flow chart that shows the bill payment process.

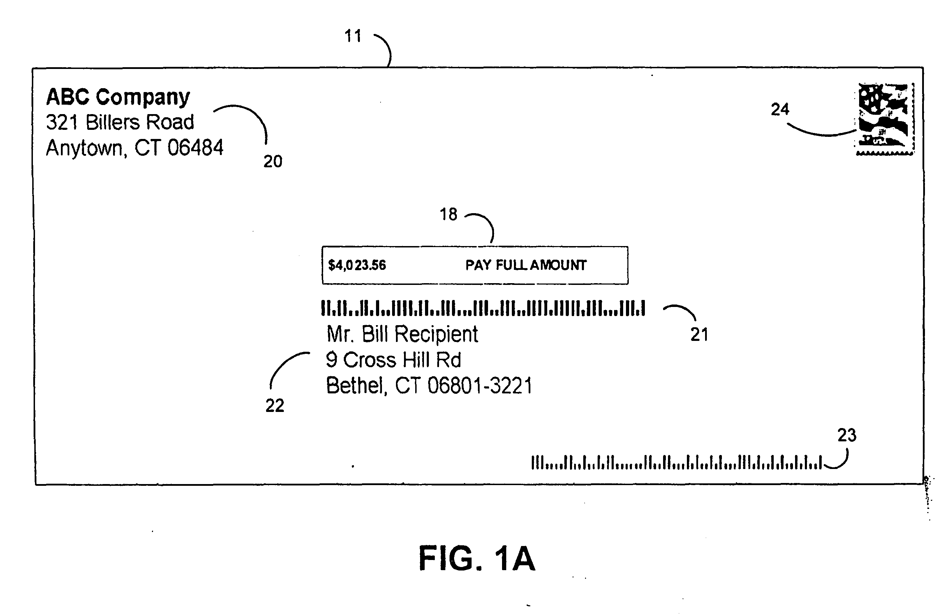

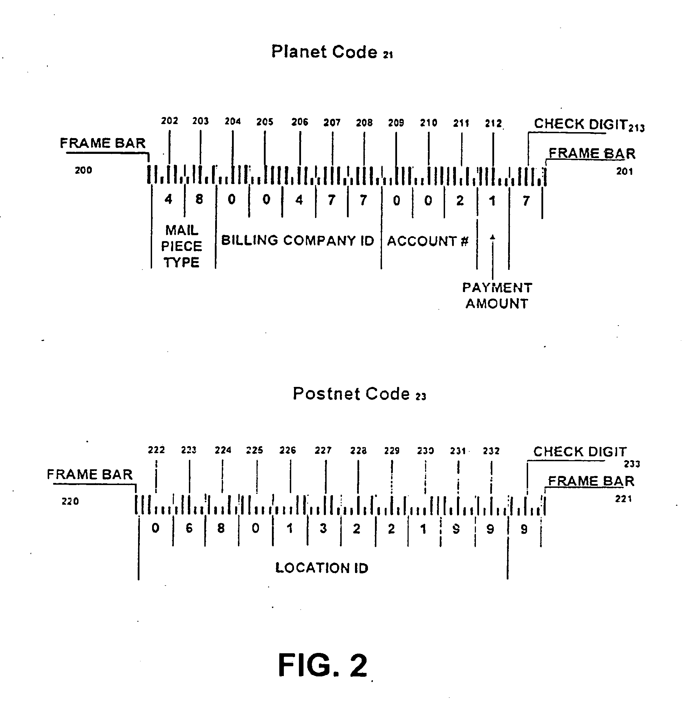

Referring now to the drawings in detail, and more particularly to Fig. 1A, the reference character 11 represents one or more mail pieces that were enclosed in an envelope (not shown) that was sent by a creditor, i.e., ABC Company, and delivered to Mr. Bill Recipient of 9 Cross Hill Road, Bethel, CT 06809-3221. Mail piece 11 is a full payment mail piece that Mr. Bill Recipient uses when he wants to pay the full amount that is due on a particular bill or loan payment, i.e., monthly mortgage payment; monthly car loan payment; electric bill; water bill; gas bill; oil bill, credit card bill, house insurance statement, car insurance statement, etc. Mail piece 11 has an address field 20 that indicates the billing company, i.e., ABC Company, that prepared mail piece 11, and a bill recipient address field 22, that indicates the party receiving the bill. Planet bar code 21 appears above address field 22 and Postnet bar code 23, that uniquely identifies Mr. Bill Recipient, appears below address field 22. Bar codes 21 and 23 will be more fully described in the descriptions of Figs. 2A and 2B. An indication of postage payment 24 is placed on mail piece 11. Optionally, the billing company, i.e., ABC Company, may indicate in space 18 the full amount that is due, i.e., $4,023,56. Mr. Bill Recipient may cover space 18 with a label when he returns mail piece 11 to ABC Company, or mail piece 11 may be a windowed envelope that covers space 18 so the amount of payment is not shown. However, bar codes 21 and 23 and address field 22 will be shown.

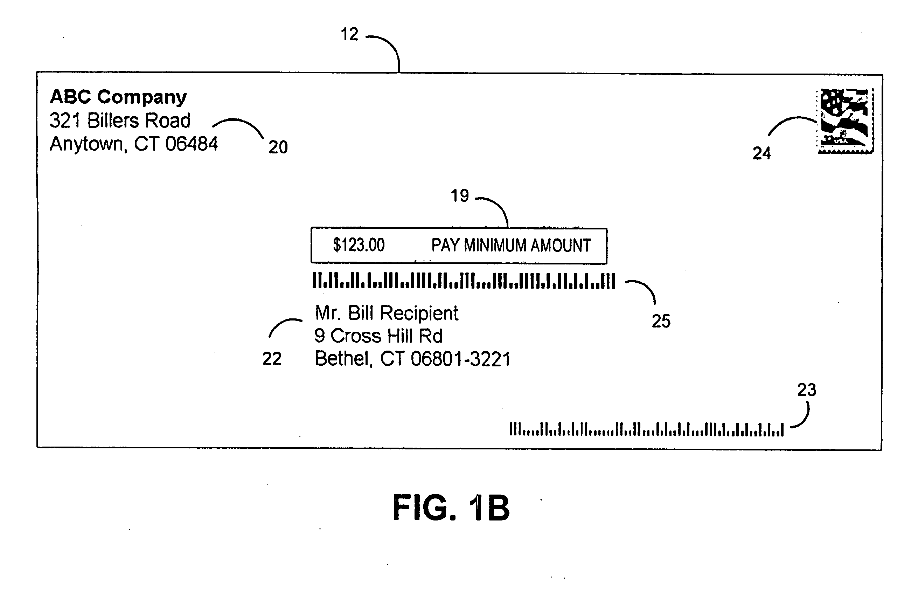

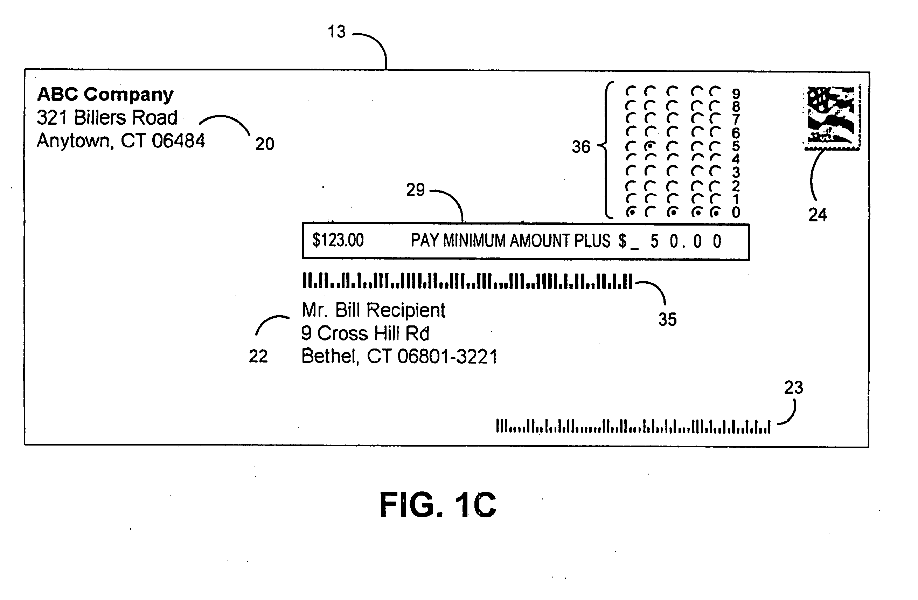

Fig. 1B is a drawing of a mail piece 12 indicating minimum payment of a bill before the mail piece was posted. One or more mail pieces 12 were enclosed in the same envelope as mail piece 11 (Fig. 1) (not shown), mail piece 13 (Fig. 1 C) that was sent by ABC Company and delivered to Mr. Bill Recipient of 9 Cross Hill Road, Bethel, CT 06801-3221. Mail piece 12 is a minimum payment mail piece which Mr. Bill Recipient uses when he wants to pay the minimum amount that is due on a particular bill or loan payment, i.e., monthly mortgage payment; monthly car loan payment; electric bill; water bill; gas bill; oil bill, credit card bill, house insurance statement, car insurance statement, etc. Mail piece 12 has an address field 20 that indicates the billing company, i.e., ABC Company, that prepared mail piece 12, and a bill recipient address field 22, that indicates the party receiving the bill. Planet bar code 25 appears above address field 22, and Postnet bar code 23 appears below address field 22. Bar codes 23 and 25 will be more fully described in the description of Fig. 2. An indication of postage payment 24 is placed on mail piece 12. Optionally, the billing Company, i.e., ABC Company, may indicate in space 19 the minimum amount that is due, i.e. $123.00.

Fig. 1C is a drawing of a mail piece 13 indicating a payment above the minimum payment of a bill before the mail piece is posted. One or more mail pieces 13 were enclosed in the same envelope as mail piece 11 (Fig. 1) (not shown), mail piece 12 (Fig. 1 B) that was sent by ABC Company and delivered to Mr. Bill Recipient of 9 Cross Hill Road, Bethel, CT 06801-3221. Mail piece 13 is a minimum payment plus a payment above the minimum payment mail piece which Mr. Bill Recipient uses when he wants to pay the minimum amount plus a specified amount determined by Mr. Bill Recipient that is due on a particular bill or loan payment, i.e., monthly mortgage payment, monthly car loan payment, electric bill, water bill, gas bill, oil bill, credit card bill, house insurance statement, car insurance statement, etc. Mail piece 13 has an address field 20 that indicates the billing company, i.e., ABC Company, that prepared mail piece 13, and a bill recipient address field 22, that indicates the party receiving the bill. Planet bar code 35 appears above address field 22, and Postnet bar code 23 appears below address field 22. Bar codes 23 and 35 will be more fully described in the description of Fig. 2. An indication of postage payment 24 is placed on mail piece 13. Optionally, the billing Company, i.e., ABC Company, may indicate in space 19 the minimum amount that is due, i.e. $123.00, and Mr. Bill Recipient may indicate an amount above the minimum payment that is due, i.e., $50.00. To indicate the $50.00 extra amount, Mr. Bill Recipient will fill in the appropriate circles 36 with a black pen or number 2 pencil to indicate $50.00.

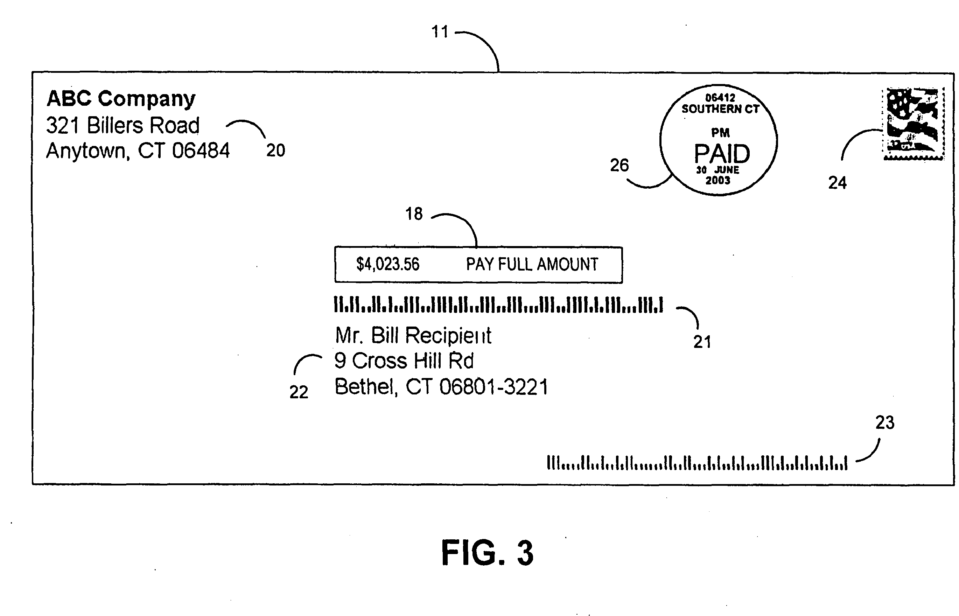

Fig. 2 is a drawing of bar codes 21 and 23 of Fig. 1A and Fig. 3. Frame bar 200 indicates the beginning of Planet code 21, and frame bar 201 indicates the end of Planet code 21. Planet code 21 also includes bars that represent digits 202-213. Digits 202-213 each contain five bars, which are used to represent digits 0―9. Digits 202 and 203 are used to represent the mail piece type, namely, type 48 which is a bill payment reply. Digits 204-208 represent the billing company identification number, i.e., number 00477; digits 209-211 represent information that identifies Mr. Bill Recipient's Account number at the address referenced by the location identification (digits 222-232). Digit 212 is a "1" which identifies the payment amount, i.e., the full payment of the bill, namely $4,023.56 (if digit 212 was a "2", it would identify the minimum payment amount Fig. 1B and be bar code 25, or if digit 212 was a "3", it would identify the minimum payment amount plus the amount specified in circles 36 Fig. 1C and be bar code 35); and, digit 213 represents an error-checking digit that is used to validate Planet code 21. It would be obvious to one skilled in the art that additional digits may be added to increase the information in bar codes 21 and 23, i.e., payment amount, etc.

Frame bar 220 indicates the beginning of Postnet bar code 23, and frame bar 221 indicates the end of Postnet bar code 23. Digits 222-233 each contain five bars which are used to represent digits 0-9. Digits 222-232 identify the customer's location, identification i.e., it is customer location number 068013221991 which happens to be encoded to represent 9 Cross Hill Road, Bethel, CT 06801-3221. Thus, by using the customer location identification digits 222-232 of Postnet code 23, and digits 204-208 that represent billing company identification and digits 209-211 that represent the customer account number of Planet code 21, a particular account for Mr. Bill Recipient of 9 Cross Hill Road, Bethel, CT 06801-3221 is uniquely identified. Digit 233 represents an error-checking digit that is used to validate Postnet bar code 23. The billing company, i.e., ABC Company, is able to obtain Mr. Bill Recipient's bank account by using Mr. Bill Recipient's account number and Mr. Bill Recipient's location identification to find Mr. Bill Recipient's bank account number in ABC Company's database.

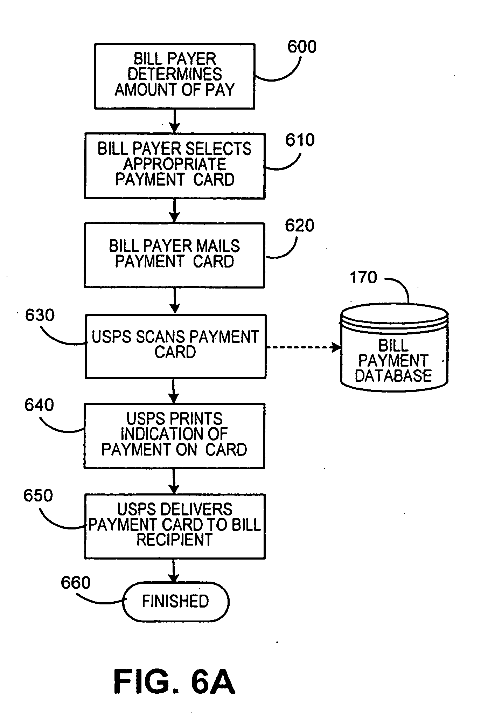

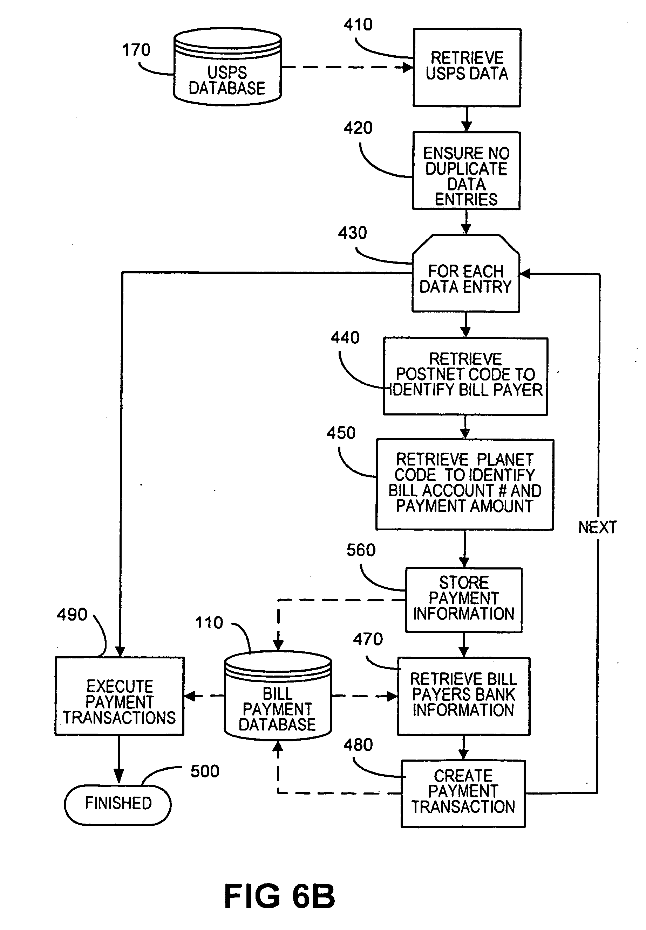

Fig. 3 is a drawing of mail piece 11 shown in Fig. 1A after mail piece 11 has been posted and scanned by the USPS. After bar codes 21 and 23 are scanned, the USPS places an indication of electronic payment 26 of the bill on mail piece 11. The scanned information is used to provide information for the transfer of funds from Mr. Bill Recipient to ABC Company as described in the description of Figs. 6A and 6B.

Then the USPS delivers mail piece 11 to Mr. Bill Recipient and provides information to ABC Company so that ABC Company may debit Mr. Bill Recipient's bank account for the amount shown in space 18 and Planet code 21, namely, $4,023.56. The payment of the bill is described in the description of Fig. 6B. It would be obvious to one skilled in the art that the USPS, a third party, or Mr. Bill Recipient may create the payment transaction and execute it.

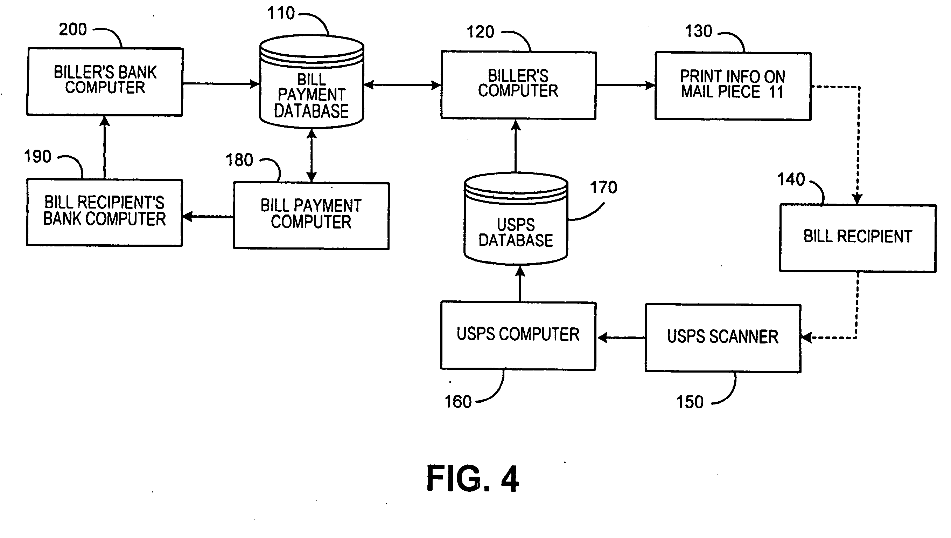

Fig. 4 is a block diagram of the process flow of mail piece 11 and mail piece 12. The process begins in data base 110, where information for the bill, i.e., mail piece 11 or 12 is stored. Data base 110 contains the minimum payment Planet code; the full payment Planet code; the Postnet bar codes; the full payment amount; the minimum payment amount; Mr. Bill Recipient's account number; Mr. Bill Recipient's bank account number; and Mr. Bill Recipient's bank routing number. Biller's computer 120 will send data to database 110 and receive data from data base 110. Computer 120 will send data to printer 130 so that printer 130 will be able to print the information appearing on mail piece 11 (Fig. 1A) and mail piece 12 (Fig. 1 B).

Mail pieces 11 or 12 will be mailed and delivered to bill recipient 140. Mr. Bill Recipient will decide if he wants to pay the bill in full or make a minimum payment on the bill. If Mr. Bill Recipient decides he wants to pay the bill in full, he will mail, mail piece 11. If Mr. Bill Recipient decides he wants to make a minimum payment, he will mail, mail piece 12.

Scanners 150 at the USPS will scan and interpret Planet code 21 and Postnet bar code 23 if mail piece 11 was mailed (Fig. 1A) or scan and interpret Planet code 25 and Postnet bar code 23 if mail piece 12 was mailed (Fig. 1 B), or scan and interpret Planet code 35, Postnet bar code 23 and circles 36 if mail piece 13 was mailed (Fig. 1 C). The interpreted Planet and Postnet bar codes and circles will be sent to USPS computer 160. Computer 160 will process the scanned Planet code, Postnet bar code, scan date, scan location and scan type (initial scan, process scan, final scan) from scanner 150. Computers 160 and 120 will be coupled to USPS data base 170 to obtain mail piece data. Biller's computer 120 will reconcile the bill it produced, i.e., mail piece 11 with the bill, i.e., mail piece that was just scanned. Then the information will be sent to bill payment database 110 to begin the funds transfer process. Bill payment computer 180 will use the information in database 110 to create an electronic funds transfer between Biller's bank computer 200 and Bill Recipient's bank computer 190.

Bill Recipient's bank computer 190 will receive Mr. Bill Recipient's Bank Account Number and the amount of funds to debit from Mr. Bill Recipient's bank account, which will be credited to ABC Company. ABC Company biller's bank computer will be credited for the funds debited to Mr. Bill Recipient's bank 190. The USPS, the customer recipient's bank and/or the company biller bank may charge the company biller for the above. Advantages of the foregoing are that the company biller will receive its money sooner, i.e., shortly after mail piece 11 or 12 is scanned by the USPS, and eliminate some bill processing costs.

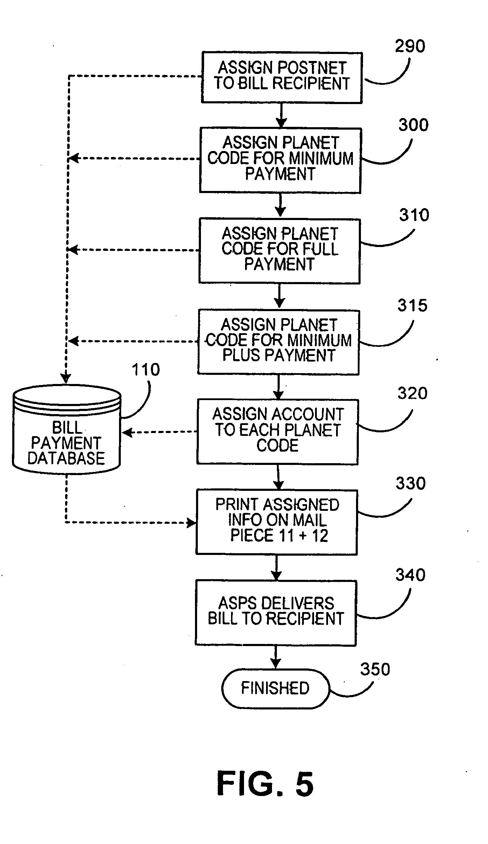

Fig. 5 is a flow chart showing the processing of the preparation of mail piece 11 of Fig. 1A. The program begins in block 290 where a Postnet bar code is assigned to Mr. Bill Recipient. In block 300, a Planet code is assigned to Mr. Bill Recipient for the minimum payment that is due. In block 310, a Planet code is assigned to Mr. Bill Recipient for the full payment that is due. Now in block 315, a Planet code is assigned to Mr. Bill Recipient for the minimum payment that is due plus an amount specified by Mr. Bill Recipient in circles 36. Now in block 320, an account number is assigned to each Planet code. The data from blocks 290, 300, 310, 315 and 320 is transmitted to bill payment database 110, and then block 330 retrieves the above information from block 110 and prints the information appearing on mail piece 11 (Fig. 1A) or the information appearing on mail piece 12 (Fig. 1B). Then the program goes to block 340 where the USPS delivers mail pieces 11 and 12 to Mr. Bill Recipient in a envelope (not shown). Now the program goes to block 350 and is finished.

Fig. 6A and 6B is a flow chart that shows the bill payment process. In block 600 (Fig. 6A), Mr. Bill Recipient determines the amount of the bill that he is going to pay. Now in block 610, Mr. Bill Recipient selects the appropriate payment mail piece, i.e., mail piece 11 (Fig. 1 A) for full payment or mail piece 12 (Fig. 1 B) for minimum payment, or mail piece 13 (Fig. 1 C) for minimum payment plus a specified amount. Then the program goes to block 620 where Mr. Bill Recipient mails the selected mail piece, i.e., mail piece 11. Then in block 630, the USPS scans mail piece 11 and obtains the Planet code and Postnet bar code from mail piece 11. The scanned data will be transmitted to USPS database 170. Then in block 640, the USPS prints the indication of electronic payment of the bill on mail piece 11 (Fig. 3).

Now in block 650, the USPS delivers mail piece 11 to Mr. Bill Recipient. Then the program goes to block 660 and is finished.

The program begins in block 410 (Fig. 6B) where data from USPS database 170 is retrieved by block 410. Then block 420 removes duplicate data entries from USPS database 170. Then in block 430, for each data entry, blocks 440 through 480 are preformed.

Then block 440 retrieves the Postnet bar code on mail piece 11 to identify Mr. Bill Recipient location. Now in block 450, the Planet code from mail piece 11 or 12 is retrieved to identify the bill account number and the payment amount. At this point, block 460 stores the payment information received from block 450. The foregoing payment information is also stored in bill payment database 110. Then block 470 retrieves Mr. Bill Recipient's bank information from database 110. The payment transaction is executed after all data entries have been processed, then block 490 executes the payment transactions created by blocks 440-480, which have been stored in bill payment database 110. Now the program goes to block 500 and is finished.

The above specification describes a new and improved method for enabling a consumer bill recipient to pay his/her bills via the USPS or other carrier sooner than was heretofore possible. It is realized that the above description may indicate to those skilled in the art additional ways in which the principles of this invention may be used without departing from the scope of the appended claims.

## Claims

1. A method for enabling a bill recipient to pay a creditor by electronic funds transfer, the method comprising the steps of:
(a) delivering a billing mail piece from a creditor to a bill recipient, the billing mail piece including a bill and a bill-paying return mail piece (11,12,13);
(b) receiving by the postal services the bill-paying return mail piece mailed by the bill recipient, the bill-paying return mail piece having an indication of postage payment and a code (21,23,25,35) printed on the face thereof that identifies the creditor, at least one of the bill recipient and the bill recipient's account number, and a payment amount;
(c) scanning the code on the bill-paying return mail piece;
(d) using the scanned code information to identify the bill recipient's bank account number from a database (110); and
(e) initiating an electronic funds transaction in accordance with the payment amount indicated in the code from the bill recipient's bank account to the creditor's bank account.

2. The method as claimed in Claim 1, wherein:
the billing mail piece delivered from the creditor to the bill recipient includes a plurality of bill-paying return mail pieces, each identifying a different payment amount in the code printed thereon; and
the receiving step comprises receiving one of the plurality of bill-paying return mail pieces selected and mailed by the bill recipient in accordance with the amount he/she wishes to pay.

3. The method as claimed in Claim 1 or Claim 2, wherein the code includes:
(a) a first code that references the bill recipient's account number and the payment amount; and
(b) a second code that references the location of the bill recipient.

4. The method as claimed in Claim 3, wherein the first code is a Planet code.

5. The method as claimed in Claim 3, wherein the second code is a Postnet bar code.

6. The method as claimed in Claim 1 or Claim 2, further including the step of indicating on the bill-paying return mail piece after funds have been transferred to the creditor's bank account from the bill recipient's bank account that the bill has been paid.

7. The method as claimed in Claim 6, further including the step of delivering the bill-paying return mail piece indicating that the bill has been paid to the bill recipient.

8. The method as claimed in Claim 3, wherein the first code references a record in the database that references the bill recipient's bank account, amount due, the account being paid, and the second code represents the physical location of the bill recipient.

9. The method as claimed in Claim 3, wherein the first code indicates that an electronic funds transaction will take place.

10. The method as claimed in Claim 1, wherein the payment amount in the code indicates the minimum amount that is due.

11. The method as claimed in Claim 1, wherein the payment amount in the code indicates the entire amount that is due.

12. The method as claimed in Claim 1, wherein the payment amount in the code indicates that an amount greater than the minimum amount that is due is to be paid.

13. The method as claimed in Claim 12, further including the step of placing an indication on the bill by the bill recipient that indicates the amount greater than the minimum amount that is due is going to be paid.

14. The method as claimed in Claim 1, further including the step of confirming payment by bill recipient to creditor.

## Patentansprüche

1. Verfahren, es einem Rechnungsempfänger zu ermöglichen, einen Kreditgeber durch einen elektronischen Zahlungsverkehr zu bezahlen, wobei das Verfahren die Schritte umfasst:
(a) Liefern einer Rechnungs-Postsendung von einem Kreditgeber an einen Rechnungsempfänger, wobei die Rechnungs-Postsendung eine Rechnung und eine Quittungs-Rückgabe-Postsendung (11, 12, 13) enthält;
(b) Empfangen der durch den Rechnungsempfänger versendeten Quittungs-Rückgabe-Postsendung durch den Postdienst, wobei die Quittungs-Rückgabe-Postsendung eine Anzeige der Porto-Zahlung und einen auf der Oberfläche davon aufgedruckten Code (21, 23, 25, 35) aufweist, der den Kreditgeber, zumindest den Rechnungsempfänger oder die Rechnungsempfänger-Kontonummer, und einen Zahlungsbetrag identifiziert;
(c) Scannen des Codes auf der Quittungs-Rückgabe-Postsendung;
(d) Verwenden der gescannten Code-Information zum Identifizieren der Rechnungsempfänger-Bankkontonummer von einer Datenbank (110); und
(e) Initiierung eines elektronischen Zahlungsverkehrs in Übereinstimmung mit dem in dem Code angezeigten Zahlungsbetrag, von dem Rechnungsempfänger-Bankkonto an das Kreditgeber-Bankkonto.

2. Verfahren nach Anspruch 1, wobei:
die von dem Kreditgeber an den Rechnungsempfänger gelieferte Rechnungs-Postsendung eine Vielzahl von Quittungs-Rückgabe-Postsendungen enthält, wobei jede einen unterschiedlichen Zahlungsbetrag in dem darauf abgedruckten Code identifiziert; und
der Empfangsschritt ein Empfangen eines der Vielzahl von Quittungs-Rückgabe-Postsendungen umfasst, die durch den Rechnungsempfänger in Übereinstimmung mit dem Betrag, den er/sie zu zahlen wünscht, ausgewählt und gesendet wurde.

3. Verfahren nach Anspruch 1 oder Anspruch 2, wobei der Code enthält:
(a) einen ersten Code, der sich auf die Rechnungsempfänger-Kontonummer und den Zahlungsbetrag bezieht; und
(b) einen zweiten Code, der sich auf die Position des Rechnungsempfängers bezieht.

4. Verfahren nach Anspruch 3, wobei der erste Code ein Planet-Code ist.

5. Verfahren nach Anspruch 3, wobei der zweite Code ein Postnet-Strich-Code ist.

6. Verfahren nach Anspruch 1 oder Anspruch 2, ferner den Schritt enthaltend des Anzeigens auf der Quittungs-Rückgabe-Postsendung, nachdem Finanzmittel von dem Rechnungsempfänger-Bankkonto auf das Kreditgeber-Bankkonto transferiert wurden, dass die Rechnung bezahlt wurde.

7. Verfahren nach Anspruch 6, ferner den Schritt enthaltend des Lieferns der Quittungs-Rückgabe-Postsendung, die anzeigt, dass die Rechnung bezahlt wurde, an den Rechnungsempfänger.

8. Verfahren nach Anspruch 3, wobei sich der erste Code auf einen Eintrag in der Datenbank bezieht, der sich auf das Empfänger-Bankkonto, den fälligen Betrag, das zu bezahlende Konto bezieht, und sich der zweite Code auf die physikalische Position des Rechnungsempfängers bezieht.

9. Verfahren nach Anspruch 3, wobei der erste Code anzeigt, dass ein elektronischer Zahlungsvorgang erfolgen wird.

10. Verfahren nach Anspruch 1, wobei der Zahlungsbetrag in dem Code den minimalen fälligen Betrag anzeigt.

11. Verfahren nach Anspruch 1, wobei der Zahlungsbetrag in dem Code den gesamten fälligen Betrag anzeigt.

12. Verfahren nach Anspruch 1, wobei der Zahlungsbetrag in dem Code anzeigt, dass ein Betrag bezahlt werden muss, der größer als der minimale fällige Betrag ist.

13. Verfahren nach Anspruch 12, ferner den Schritt enthaltend des Aufbringens einer Anzeige auf der Rechnung durch den Rechnungs-Empfänger, die anzeigt, dass der Betrag, der größer ist als der minimale fällige Betrag, bezahlt werden wird.

14. Verfahren nach Anspruch 1, ferner den Schritt enthaltend des Bestätigens der Zahlung durch den Rechnungsempfänger an den Kreditgeber.

## Revendications

1. Procédé destiné à permettre au destinataire d'une facture de payer un créancier par transfert de fonds électronique, le procédé comprenant les étapes consistant à :
(a) délivrer une pièce de courrier de facturation d'un créancier à un destinataire d'une facture, la pièce de courrier de facturation comprenant une facture et une pièce de courrier de retour de paiement de facture (11, 12, 13),
(b) recevoir par le biais des services postaux la pièce de courrier de retour de paiement de facture envoyée par le destinataire de la facture, la pièce de courrier de retour de paiement de facture comportant une indication d'un paiement de taxe d'affranchissement et un code (21, 23, 25, 35) imprimé sur sa face, qui identifie le créancier, au moins l'un du destinataire de la facture et du numéro de compte du destinataire de la facture, et un montant du paiement,
(c) numériser le code sur la pièce de courrier de retour de paiement de facture,
(d) utiliser les informations du code numérisé pour identifier le numéro de compte bancaire du destinataire de la facture à partir d'une base de données (110),
(e) initier une transaction de fonds électronique conformément au montant du paiement indiqué dans le code du compte bancaire du destinataire de la facture au compte bancaire du créancier.

2. Procédé selon la revendication 1, dans lequel :
la pièce de courrier de facturation délivrée du créancier au destinataire de la facture comprend une pluralité de pièces de courriers de retour de paiement de factures, identifiant chacune un montant de paiement différent dans le code imprimé sur celle-ci, et
l'étape de réception comprend la réception d'une pièce de courrier parmi la pluralité de pièces de courriers de retour de paiement de factures sélectionnées et expédiées par le destinataire de la facture conformément au montant qu'il/elle souhaite payer.

3. Procédé selon la revendication 1 ou la revendication 2, dans lequel le code comprend :
(a) un premier code qui fait référence au numéro de compte du destinataire de la facture et au montant du paiement, et
(b) un deuxième code qui fait référence à l'emplacement du destinataire de la facture.

4. Procédé selon la revendication 3, dans lequel le premier code est un code Planet.

5. Procédé selon la revendication 3, dans lequel le deuxième code est un code à barres Postnet.

6. Procédé selon la revendication 1 ou la revendication 2, comprenant en outre l'étape consistant à indiquer sur la pièce de courrier de retour de paiement de facture, après que les fonds ont été transférés sur le compte bancaire du créancier à partir du compte bancaire du destinataire de la facture, que la facture a été payée.

7. Procédé selon la revendication 6, comprenant en outre l'étape consistant à délivrer la pièce de courrier de retour de paiement de facture indiquant que la facture a été payée au destinataire de la facture.

8. Procédé selon la revendication 3, dans lequel le premier code fait référence à un enregistrement dans la base de données qui fait référence au code bancaire du destinataire de la facture, au montant dû, au compte qui est payé, et le deuxième code représente l'emplacement physique du destinataire de la facture.

9. Procédé selon la revendication 3, dans lequel le premier code indique qu'une transaction de fonds électronique aura lieu.

10. Procédé selon la revendication 1, dans lequel le montant du paiement dans le code indique le montant minimum qui est dû.

11. Procédé selon la revendication 1, dans lequel le montant du paiement dans le code indique le montant total qui est dû.

12. Procédé selon la revendication 1, dans lequel le montant du paiement dans le code indique qu'un montant supérieur au montant minimum qui est dû, doit être payé.

13. Procédé selon la revendication 12, comprenant en outre l'étape consistant à placer une indication sur la facture par le destinataire de la facture qui indique que le montant supérieur au montant minimum qui est dû, va être payé.

14. Procédé selon la revendication 1, comprenant en outre l'étape consistant à confirmer le paiement par le destinataire de la facture au créancier.
